(19) Europäisches Patentamt
European Patent Office
Office européen des brevets

(11) **EP 3 770 634 A1**

(12) **EUROPEAN PATENT APPLICATION**

(43) Date of publication:
**27.01.2021 Bulletin 2021/04**

(51) Int Cl.:
**G01S 7/487** (2006.01)    **G01S 17/10** (2020.01)
**G01S 17/89** (2020.01)    **G01S 17/931** (2020.01)

(21) Application number: **20187666.1**

(22) Date of filing: **24.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.07.2019 JP 2019137157**

(71) Applicants:
• **KABUSHIKI KAISHA TOSHIBA**
  **Minato-ku**
  **Tokyo**
  **105-0023 (JP)**

• **Toshiba Electronic Devices & Storage Corporation**
  **Tokyo, 105-0023 (JP)**

(72) Inventors:
• **Kubota, Hiroshi**
  **Tokyo (JP)**
• **Matsumoto, Nobu**
  **Tokyo (JP)**

(74) Representative: **Hoffmann Eitle**
**Patent- und Rechtsanwälte PartmbB**
**Arabellastraße 30**
**81925 München (DE)**

(54) **DISTANCE MEASURING DEVICE, AND DISTANCE MEASURING METHOD**

(57) A distance measuring device according to an embodiment that processes a first time-series luminance signal generated on the basis of a sensor output corresponding to reflected light of laser light, includes a measurement signal generation circuit, and a measurement processing circuit. The measurement signal generation circuit generates a third time-series luminance signal obtained by subtracting, from the first time-series luminance signal, a second time-series luminance signal corresponding to reflected light from outside a measurement target object based on the laser lightl. The measurement processing circuit generates a distance value to the measurement target object on the basis of the third time-series luminance signal.

FIG. 2

EP 3 770 634 A1

## Description

<u>FIELD</u>

Embodiments of the present invention relate to a distance measuring device, and a distance measuring method.

<u>BACKGROUND</u>

There is known a distance measuring device called LIDAR (Light Detection and Ranging, Laser Imaging Detection and Ranging). The distance measuring device irradiates laser light on a measurement target object and converts the intensity of reflected light reflected by the measurement target object into a time-series luminance signal on the basis of an output of a sensor. Consequently, the distance to the measurement target object is measured on the basis of a time difference between a point in time of emission of the laser light and a point in time corresponding to a peak of a luminance signal value.

However, in some cases, laser light is reflected by dust or the like adhering to a cover glass, a mirror, a housing, and a cover of the distance measuring device and stray light occurs. It is likely that a time-series luminance signal produced by the stray light and the time-series luminance signal produced by the measurement target object overlap and a distance value to the measurement target object cannot be obtained. It is also likely that the distance value to the measurement target object cannot be obtained because of, like the overlap due to the stray light, overlap of strong reflected light from an object (for example, a white car) having high reflectance present near a target object or an object (for example, own car) reflected on a mirror surface (for example, the surface of a metallic-painted car).

<u>BRIEF DESCRIPTION OF THE DRAWINGS</u>

FIG. 1 is a diagram showing a schematic overall configuration of a driving supporting system according to an embodiment;

FIG. 2 is a diagram showing a configuration example of a distance measuring device according to a first embodiment;

FIG. 3 is a diagram schematically showing an emission pattern of a light source in one frame;

FIG. 4 is a schematic diagram enlarging and showing irradiation positions of laser lights on a measurement target object in one frame;

FIG. 5 is a schematic diagram enlarging and showing irradiation positions on the measurement target object in irradiation order different from irradiation order in FIG. 4;

FIG. 6 is a diagram showing an example in which a vertical one row is simultaneously irradiated using a one-dimensional laser light source;

FIG. 7A is a diagram showing an example in which the vertical one row is simultaneously irradiated for each horizontal row using the one-dimensional laser light source;

FIG. 7B is a diagram showing an example of a polygon mirror;

FIG. 7C is a diagram showing an example of laser light having an elongated shape in the longitudinal direction irradiated on an irradiation surface of the polygon mirror;

FIG. 8 is a diagram showing a configuration example of a light receiving element in a sensor;

FIG. 9 is a diagram showing an example of voltage and current characteristics of an avalanche photodiode;

FIG. 10 is a diagram showing an example of current and time characteristics during Geiger discharge;

FIG. 11 is a diagram showing an example of a first time-series luminance signal;

FIG. 12 is a block diagram showing the configuration of a signal processing circuit;

FIG. 13A is a diagram showing an example in which a white car and an oncoming car overlap in a measurement target during defocusing;

FIG. 13B is a diagram showing an example in which a measurement target is a metallic car;

FIG. 13C is a diagram showing an example of current and distance characteristics at the time when reflected light is reflected during discharge due to stray light;

FIG. 13D is a diagram showing an example of current and distance characteristics at the time when reflected light is reflected by a white car;

FIG. 13E is a diagram showing an example of current and distance characteristics at the time when a metallic car is a measurement target;

FIG. 14 is a diagram conceptually showing a processing example of an original signal generation circuit;

FIG. 15A is a diagram conceptually showing a processing example in a state in which a first time-series luminance signal piles up;

FIG. 15B is a diagram conceptually showing a processing example at the time when a longer time is required for rising;

FIG. 15C is a diagram conceptually showing a processing example of a first time-series luminance signal obtained by measuring a mirror surface-like target;

FIG. 15D is a diagram conceptually showing a processing example at the time when the influence of parasitic resistance and capacitance is larger;

FIG. 15E is a diagram conceptually showing a processing example of a region ahead of a skirt of a first time-series luminance signal B1;

FIG. 16 is a diagram conceptually showing a processing example of a correction circuit;

FIG. 17 is a flowchart showing a processing example of the distance measuring device;

FIG. 18 is a block diagram showing the configuration of a signal processing circuit according to a second embodiment;

FIG. 19 is a flowchart showing a processing example of a distance measuring device according to the second embodiment;

FIG. 20 is a flowchart showing a processing example of a distance measuring device according to a first modification of the second embodiment;

FIG. 21 is a flowchart showing a processing example of a distance measuring device according to a second modification of the second embodiment; and

FIG. 22 is a flowchart showing a processing example of a distance measuring device according to a third modification of the second embodiment.

## DETAILED DESCRIPTION

A distance measurement device and a distance measuring method according to an embodiment of the present invention are explained in detail below with reference to the drawings. Note that the embodiments explained below are examples of embodiments of the present invention. The present invention is not interpreted to be limited to the embodiments. In the drawings referred to in the embodiments, the same parts and parts having the same functions are denoted by the same or similar reference numerals and signs. Repeated explanation of the portions is sometimes omitted. Dimension ratios of the drawings are sometimes different from actual ratios for convenience of explanation. A part of components is sometimes omitted from the drawings.

(First Embodiment)

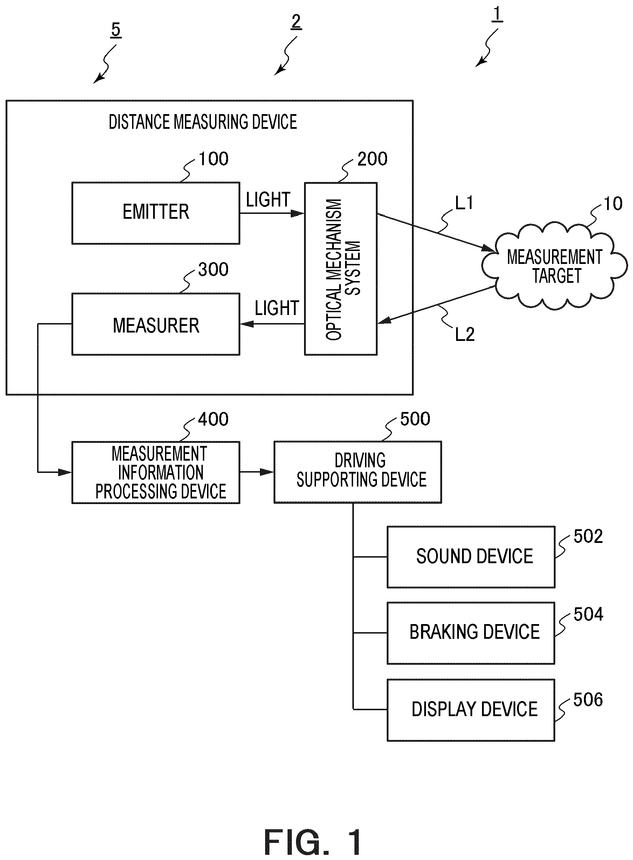

FIG. 1 is a diagram showing a schematic overall configuration of a driving supporting system 1 according to an embodiment. As shown in FIG. 1, the driving supporting system 1 performs driving support based on a distance image. The driving supporting system 1 includes a distance measuring system 2, driving supporting device 500, a sound device 502, a braking device 504, and a display device 506. The distance measuring system 2 generates a distance image of a measurement target object 10 and includes a distance measuring device 5 and a measurement information processing device 400.

The distance measuring device 5 measures a distance to the measurement target object 10 using a scanning scheme or a TOF (Time Of Flight) scheme. More specifically, the distance measuring device 5 includes an emitter 100, an optical mechanism system 200, and a measurement circuit 300.

The emitter 100 intermittently emits laser light L1. The optical mechanism system 200 irradiates the laser light L1 emitted by the emitter 100 on the measurement target object 10 and makes reflected light L2 of the laser light L1 reflected on the measurement target object 10 incident on the measurement circuit 300. The laser light means light having a phase and a frequency almost aligned. The reflected light L2 means light in a predetermined direction among scattered lights by the laser light L1.

The measurement circuit 300 measures the distance to the measurement target object 10 on the basis of the reflected light L2 received via the optical mechanism system 200. That is, the measurement circuit 300 measures the distance to the measurement target object 10 on the basis of a time difference between a point in time when the emitter 100 irradiates the laser light L1 on the measurement target object 10 and a point in time when the reflected light L2 is measured.

The measurement information processing device 400 performs noise reduction processing and outputs distance image data on the basis of distances to a plurality of measurement points on the measurement target object 10. A part or all of the measurement information processing device 400 may be incorporated in a housing of the distance measuring device 5.

The driving supporting device 500 supports driving of a vehicle according to an output signal of the measurement information processing device 400. The sound device 502, the braking device 504, the display device 506, and the like are connected to the driving supporting device 500.

The sound device 502 is, for example, a speaker and is dispose in a position audible from a driver's seat in the vehicle. The driving supporting device 500 causes, on the basis of an output signal of the measurement information processing device 400, for example, the sound device 502 to generate sound such as "five meter to a target object". Consequently, for example, even when attention of the driver decreases, it is possible to cause the driver to hear the sound to call the attention of the driver.

The braking device 504 is, for example, an auxiliary brake. The driving supporting device 500 causes, on the basis of an output signal of the measurement information processing device 400, the braking device 504 to brake the vehicle, for example, when the target object approaches a predetermined distance, for example, 3 meters to the vehicle.

The display device 506 is, for example, a liquid crystal monitor. The driving supporting device 500 displays an image on the display device 506 on the basis of an output signal of the measurement information processing device 400. Consequently, for example, even at the time of backlight, it is possible to accurately grasp external information by referring to the image displayed on the display device 506.

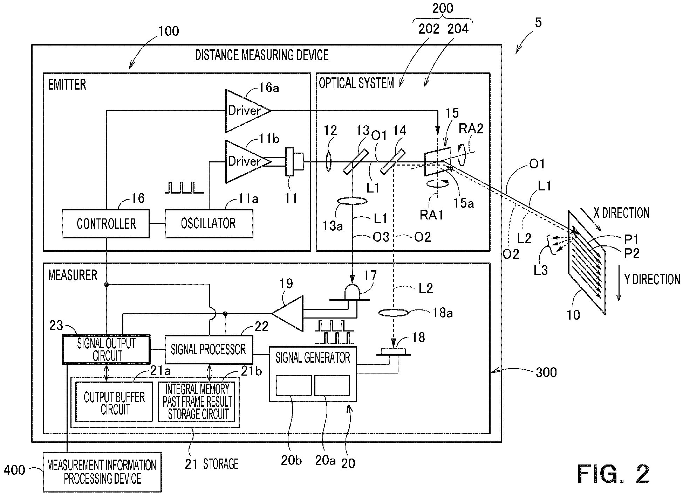

More detailed configuration examples of the emitter 100, the mechanism optical mechanism system 200, and the measurement circuit 300 of the distance measuring device 5 according to the embodiment are explained with reference to FIG. 2. FIG. 2 is a diagram showing a configuration example of the distance measuring device 5 according to the first embodiment. As shown in FIG. 2, the distance measuring device 5 includes the emitter 100, the optical mechanism system 200, the measurement circuit 300, and the measurement information processing device 400. Among scattered lights L3, scattered light in a predetermined direction is referred to as reflected light L2.

The emitter 100 includes a light source 11, an oscillator 11a, a first driving circuit 11b, a control circuit 16, and a second driving circuit 16a.

The optical mechanism system 200 includes an irradiation optical system 202 and a light-receiving optical system 204. The irradiation optical system 202 includes a lens 12, a first optical element 13, a lens 13a, and a mirror (a reflection device) 15.

The light-receiving optical system 204 incudes a second optical element 14 and the mirror 15. That is, the irradiation optical system 202 and the light-receiving optical system 204 share the mirror 15.

The measurement circuit 300 includes a photodetector 17, a sensor 18, a lens 18a, a first amplifier 19, a signal generation circuit 20, a storage circuit 21, a signal processing circuit 22, and a signal output circuit (an output interface) 23. The signal processing circuit 22 according to this embodiment corresponds to a signal processing device.

The oscillator 11a of the emitter 100 generates a pulse signal on the basis of control by the control circuit 16. The first driving circuit 11b drives the light source 11 on the basis of the pulse signal generated by the oscillator 11a. The light source 11 is a laser light source such as a laser diode. The light source 11 intermittently emits the laser light L1 according to driving by the first driving circuit 11b.

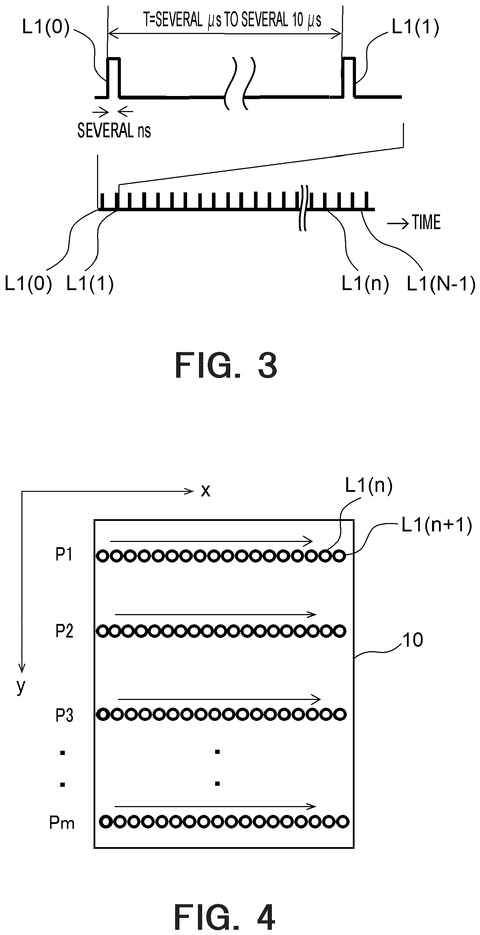

FIG. 3 is a diagram schematically showing an emission pattern of the light source 11 in one frame. In FIG. 3, the horizontal axis indicates time and the vertical axis indicates emission timing of the light source 11. A figure on the upper side is an enlarged part view in a figure on the lower side. As shown in FIG. 3, the light source 11 intermittently repeatedly emits laser light L1(n) (0≤n<N), for example, at an interval of T=several microseconds to several ten microseconds. The laser light L1 emitted n-th is represented as L1(n). "N" indicates the number of times of irradiation of the laser light L1(n) irradiated to measure the measurement target object 10 in one frame. When the irradiation for one frame ends, irradiation for the next frame is started from L1(0).

As shown in FIG. 2, the light source 11, the lens 12, the first optical element 13, the second optical element 14, and the mirror 15 are disposed in this order on an optical axis O1 of the irradiation optical system 202. Consequently, the lens 12 collimates the intermittently emitted laser light L1 and guides the laser light L1 to the first optical element 13.

The first optical element 13 transmits the laser light L1 and makes a part of the laser light L1 incident on the photodetector 17 along an optical axis O3. The first optical element 13 is, for example, a beam splitter.

The second optical element 14 further transmits the laser light L1 transmitted through the first optical element 13 and makes the laser light L1 incident on the mirror 15. The second optical element 14 is, for example, a half mirror or a perforated mirror.

The mirror 15 includes a reflection surface 15a that reflects the laser light L1 intermittently emitted from the light source 11. The reflection surface 15a is capable of rotating around, for example, two rotation axes RA1 and RA2 crossing each other. Consequently, the mirror 15 cyclically changes an irradiation direction of the laser light L1.

The control circuit 16 includes, for example, a CPU (Central Processing Unit). The control circuit 16 performs, on the second driving circuit 16a, control for continuously changing an inclination angle of the reflection surface 15a. The second driving circuit 16a drives the mirror 15 according to a control signal supplied from the control circuit 16. That is, the control circuit 16 controls the second driving circuit 16a to change the irradiation direction of the laser light L1. Changing an irradiation direction or the like of light is called scanning.

FIG. 4 is a schematic diagram enlarging and showing irradiation positions of the laser light L1 on the measurement target object 10 in one frame. As shown in FIG. 4, the reflection surface 15a changes the irradiation direction for each laser light L1 and discretely irradiates the laser light L1 along a substantially parallel plurality of linear paths P1 to Pm (m is a natural number equal to or larger than 2) on the measurement target object 10. In this way, the distance measuring device 5 according to this embodiment irradiates the laser light L1(n) (0≤n<N) toward the measurement target object 10 once at a time while changing an irradiation direction O(n) (0≤n<N) of the laser light L1(n) for each frame f(m) (0≤m<M). The irradiation direction of the laser light L1(n) is represented as O(n). That is, in the distance measuring device 5 according to this embodiment, the laser light L1(n) is irradiated once in the irradiation direction O(n). As means for realizing the scanning shown in FIG. 4, there is, for example, a Galvano mirror.

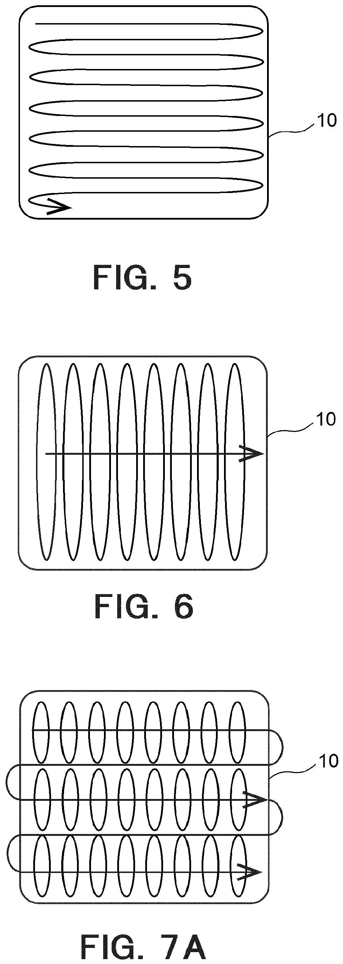

FIG. 5 is a diagram enlarging and showing irradiation positions on the measurement target object 10 having irradiation order different from irradiation order shown in FIG. 4. In this case, first, light is scanned in the right direction in FIG. 5, thereafter turned around and scanned in the left direction, and further scanned in the right direction. In this way, the scanning is repeated. As means for realizing the scanning shown in FIG. 5, there is, for example, a two-axis MEMS (Micro Electro Mechanical System). FIG. 6 is a diagram showing an example in which a plurality of pixels are simultaneously irradiated in a longitudinal row using a laser light source including an irradiation surface having an elongated shape in a longitudinal direction and/or an aspherical collimator lens having anisotropy. As means for performing the scanning shown in FIG. 6, there is a rotary mirror and a one-axis MEMS. It is also possible to use a rotating method of directly rotating the distance measuring device 5 without using the mirror 15. In this case, the second optical element 14 is not used either. FIG. 7A is a diagram showing an example in which the plurality of pixels are simultaneously irradiated repeatedly a plurality of time in the longitudinal row using the laser light source including the irradiation surface having the elongated shape in the longitudinal direction and/or the aspherical collimator lens having anisotropy while changing a direction in the vertical direction.

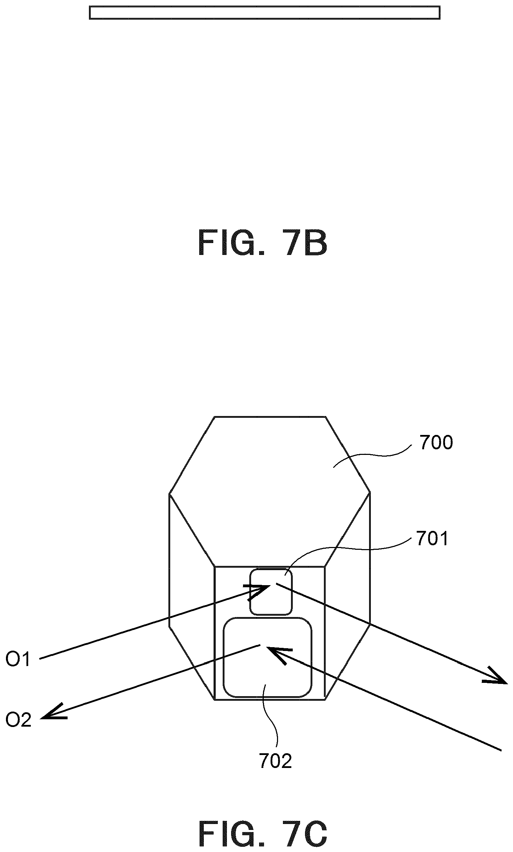

As means for performing the scanning shown in FIG. 7A, there is, for example, a polygon mirror having different tilt angles shown in FIGS. 7B and 7C. FIG. 7B is a diagram showing an example of laser light having an elongated shape in the longitudinal direction irradiated on an irradiation surface 701 (FIG. 7C) of the polygon mirror. FIG. 7C is a diagram showing, for example, an example of a polygon mirror 700 disposed in the position of the mirror 15 (FIG. 2). The projected the lase light hits O1, and the light returaned from the object hits O2. The irradiation surface 701 shown in FIG. 7B have different tilt angels for each of surfaces. Consequently, when the polygon mirror 700 rotates, an irradiation direction of irradiated laser light changes in the vertical direction.

As another means for performing the scanning shown in FIG. 7A, there are a rotary mirror and a two-axis MEMS. The scanning methods explained above are mechanical methods. However, as another existing method for performing scanning, there is an OPA method (Optical Phased array). Since this embodiment does not rely on a method of scanning light, the light may be scanned by either the mechanical methods or the OPA methods.

In this way, the laser light L1(n) according to this embodiment is sequentially irradiated on one point at a time as shown in FIGS. 4 and 5. However, the laser light L1(n) is not limited to this and may be simultaneously irradiated on a plurality of points. For example, a vertical one row may be simultaneously irradiated using a one-dimensional laser light source as shown in FIG. 6 or FIG. 7A. To simplify explanation, the measurement target object 10 is schematically illustrated in a flat shape in FIG. 4. However, in actual measurement, the measurement target object 10 is, for example, an automobile.

An interval of irradiation positions of laser lights L1(n) and L1(n+1) on the measurement target object 10 corresponds to the irradiation interval T=several microseconds to several ten microseconds (FIG. 3) between the laser lights L1. In this way, the laser lights L1 having different irradiation directions are discretely irradiated on the linear paths P1 to Pm. Note that the number of linear paths and a scanning direction are not particularly limited.

As shown in FIG. 2, on an optical axis O2 of the light-receiving optical system 204, the reflection surface 15a of the mirror 15, the second optical element 14, the lens 18a, and the sensor 18 are disposed in the order of incidence of the reflected light L2. The optical axis O1 is the same as a focal axis of the lens 12 that passes the center position of the lens 12. The optical axis O2 is the same as a focal axis of the lens 18a that passes the center position of the lens 18a.

The reflection surface 15a makes the reflected light L2 traveling along the optical axis O2 among the scattered lights L3 scattered on the measurement target object 10 incident on the second optical element 14. The second optical element 14 changes a traveling direction of the reflected light L2 reflected on the reflection surface 15a and makes the reflected light L2 incident on the lens 18a of the measurement circuit 300 along the optical axis O2. As a method of separating the optical axis O2 from the optical axis O1 and making the reflected light L2 incident on the lens 18a, it is also possible to use a method (a separation optical system) of, without using the second optical element 14, increasing the mirror reflection surface 15a in size, separating the optical axis O1 and the optical axis O2, and making the reflected light L2 directly incident on the lens 18a from the mirror reflection surface 15a. The lens 18a condenses the reflected light L2 made incident along the optical axis O2 to the sensor 18.

On the other hand, a traveling direction of light reflected in a direction different from the direction of the laser light L1 among the scattered lights L3 deviates from the optical axis O2 of the light-receiving optical system 204. Therefore, the light is made incident on a position deviating from an incident surface of the sensor 18. On the other hand, among environment lights such as sunlight scattered by some object, there are lights traveling along the optical axis O2. These lights are made incident on the incident surface of the sensor 18 at random and become random noise.

In FIG. 2, for clarification, optical paths of the laser light L1 and the reflected light L2 are divided and shown. However, actually, the optical paths overlap excluding the separation optical system. An optical path in the center of a light beam of the laser light L1 is shown as the optical axis O1. Similarly, an optical path in the center of a light beam of the reflected light L2 is shown as the optical axis O2.

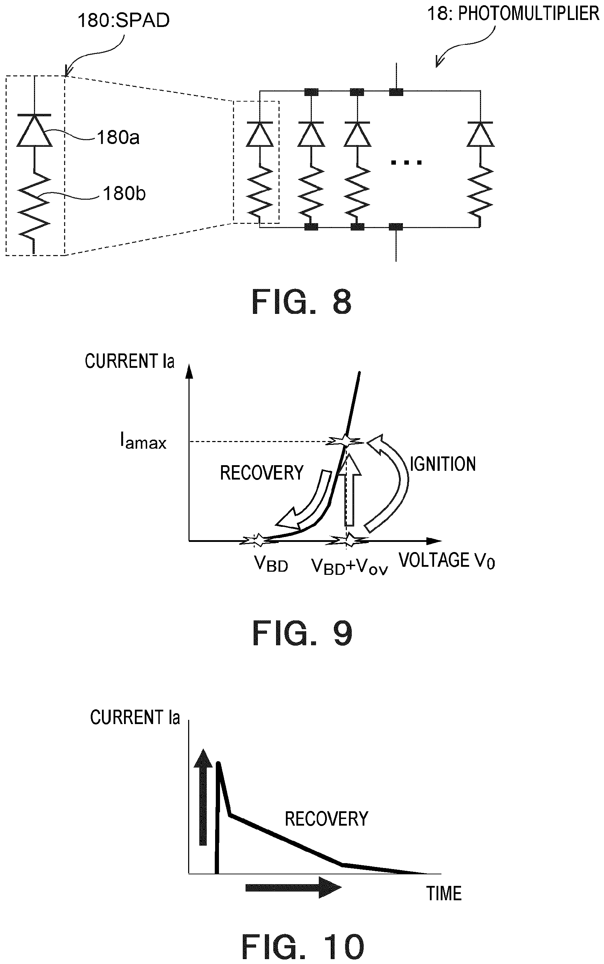

FIG. 8 is a diagram showing a configuration example of a light receiving element in the sensor 18. The sensor 18 is configured by, for example, a photomultiplier (SiPM: Silicon Photomultiplier, when made of silicon). The photomultiplier is a photon counting device obtained by integrating a plurality of single-photon avalanche diodes (SPADs). The photomultiplier is capable of detecting feeble light in a photon counting level.

More specifically, the sensor 18 converts the reflected light L2 received via the light-receiving optical system 204 into an electric signal. A light receiving element 180 of the sensor 18 is formed by connecting, in parallel, a plurality of SPADs including avalanche photodiodes (APDs) 180a in a Geiger mode and quench resistors 180b.

The avalanche photodiode 180a is a light receiving element, light reception sensitivity of which is increased using a phenomenon called avalanche multiplication. The avalanche photodiode 180a used in the Geiger mode is generally used together with a quench element (explained below) and called single photon avalanche photodiode (SPAD). The avalanche photodiode 180a made of silicon has sensitivity to, for example, light having a wavelength of 200 nm to 1000 nm.

FIG. 9 is a diagram showing an example of voltage and current characteristics of the avalanche photodiode 180a in the Geiger mode. The horizontal axis indicates voltage and the vertical axis indicates an electric current. The avalanche photodiode 180a has a high internal electric field and changes to the Geiger mode when a reverse voltage is increased to a breakdown voltage $V_{BD}$ or more. In the Geiger mode, for example, at (breakdown voltage $V_{BD}$ + over voltage $V_{OV}$), Geiger discharge (ignition) occurs with respect to incidence of a single photon and one electron or hole generated by a photoelectric effect by the incidence of the single photon.

The quench resistor 180b is connected to the avalanche photodiode 180a in series. The quench resistor 180b stops the Geiger discharge of the avalanche photodiode 180a. In other words, when an electric current flows to the quench resistor 180b during the Geiger discharge, voltage applied to the avalanche photodiode 180a drops to the breakdown voltage $V_{BD}$ or less. Such a phenomenon is generally called quenching.

FIG. 10 is a diagram showing an example of current and time characteristics during the Geiger discharge. The horizontal axis indicates time and the vertical axis indicates an electric current. An electric current $I_a$ during the Geiger mode steeply rises to reach $I_{amax}$ and quenching occurs. On the other hand, a time of recovery is generally decided by a time constant $Tres=Rq \times C$ of a resistance value Rq of the quench resistor 180b and capacitance C of the avalanche photodiode 180a. In this way, the electric current $I_a$ during the Geiger mode has an asymmetrical current value that changes in time-series. A multiplication ratio equivalent to the number of electrons that flowed according to one photoelectric effect is approximately $10^5$ to $10^6$.

The sensor 18 according to this embodiment is configured by a silicon photomultiplier but is not limited to this. For example, the sensor 18 may be configured by disposing pluralities of photodiodes, avalanche breakdown diodes (ABDs), photomultipliers made of a compound semiconductor, or the like. The photodiode is configured by, for example, a semiconductor functioning as a photodetector. The avalanche breakdown diode is a photodiode that causes avalanche breakdown at a specific reverse voltage to thereby increase a multiplication ratio to a medium degree.

As shown in FIG. 2, the signal generation circuit 20 converts an electric signal output by the sensor 18 into a time-series luminance signal at a predetermined sampling interval. The signal generation circuit 20 includes an amplifier 20a and an AD converter 20b. The amplifier 20a amplifies, for example, an electric signal based on the reflected light L2. More specifically, as the amplifier 20a, for example, a transimpedance amplifier (TIA) that converts a current signal of the sensor 18 into a voltage signal and amplifies the voltage signal is used. In this way, a signal obtained by sampling the electric signal based on the reflected light L2 at the predetermined sampling interval is referred to as time-series luminance signal. That is, the time-series luminance signal is a series of values obtained by sampling a temporal change of the reflected light L2 at the predetermined sampling interval.

The AD converter 20b (ADC: Analog to Digital Converter) samples, at a plurality of sampling timings, the electric signal amplified by the amplifier 20a and converts the electric signal into a first time-series luminance signal B1 corresponding to an irradiation direction of the laser light L1. For example, the AD converter 20b samples an electric signal shown in FIG. 10 amplified by the amplifier 20a. In this case, the first time-series luminance signal generated by the signal generation circuit 20 becomes asymmetrical. That is, the first time-series luminance signal generated by the signal generation circuit 20 becomes asymmetrical according to a photon made incident on the avalanche photodiode 180a (FIG. 8).

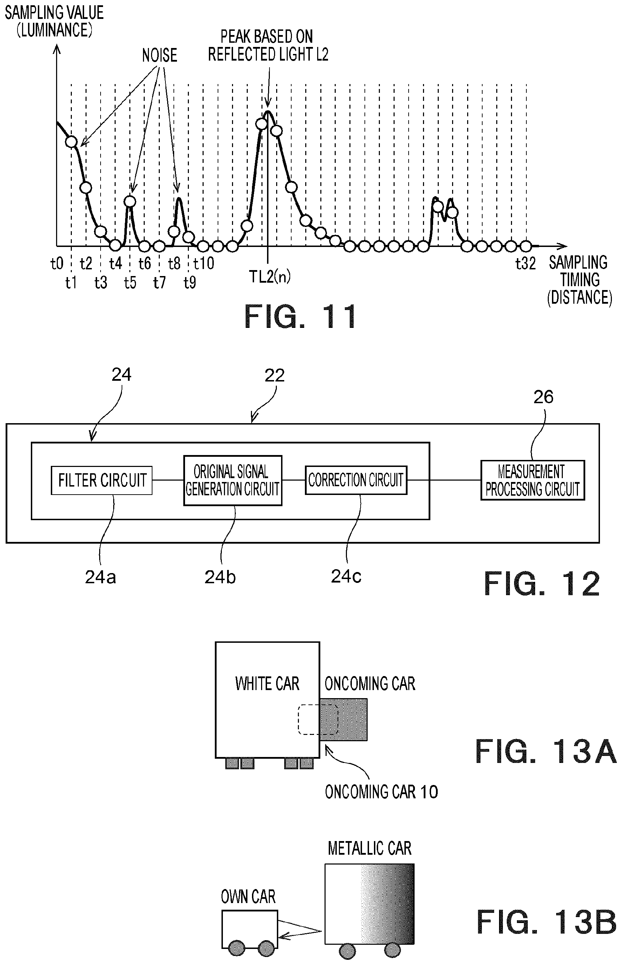

FIG. 11 is a diagram showing an example of a first time-series luminance signal B1(x, y). That is, FIG. 11 is a diagram showing an example of a sampling value of an electric signal by the signal generation circuit 20. The horizontal axis of FIG. 11 indicates sampling timing and the vertical axis of FIG. 1 indicates a sampling value, that is, a luminance value of the first time-series luminance signal B1(x, y).

For example, sampling timings obtained by adding a blanking time to sampling timings t0 to t32 correspond to an elapsed time "T" (FIG. 3) from when the laser light L1(n) is irradiated until the next laser light L1(n+1) is irradiated. A peak in the figure is a sampling value based on the reflected light L2. Sampling timing TL2 indicating the peak corresponds to a double of the distance to the measurement target object 10.

More specifically, the distance is calculated by the following expression: distance=light speed×(sampling timing TL2 - timing when the photodetector 17 detects the laser light L1)/2. The sampling timing is an elapsed time from light emission start time of the laser light L1.

In the first time-series luminance signal B1(x, y), a coordinate (x, y) indicates a coordinate decided on the basis of an irradiation direction of the laser light L1(n) ($0 \leq n < N$). That is, the coordinate (x, y) corresponds to a coordinate at the time when a distance image is generated. More specifically, in the case shown in FIG. 4, a coordinate (0, 0) corresponding to L1(0) is set as the origin. The number of irradiations L1(n) ($0 \leq n < N$) in the horizontal direction is represented as HN. A function [a] is a function indicating a maximum integer equal to or smaller than "a". In this case, $x=n-[n \div HN] \times HN$ and

y=[n÷HN]. In the cases of FIGS. 5 to 7A, a relation between "x" and "y" and "n" is different. However, calculation is easy if distortion is neglected. Therefore, explanation is omitted. In the following explanation, for simplification, "x" and "y" are described about only the case of FIG. 4. However, the present invention is possible about the cases of FIGS. 5 to 7A basically without depending on a method of scanning. Note that the number of sampling timings and a time range in which sampling is performed shown in the figure are examples. The number of sampling timings and the time range in which the sampling is performed may be changed. As the first time-series luminance signal B1(x, y), luminance signals of near coordinates may be integrated and used. For example, luminance signals in coordinate ranges of 2×2, 3×3, and 5×5 may be integrated. Such processing for integrating the luminance signals in the coordinate ranges of 2×2, 3×3, and 5×5 is sometimes called averaging. The integration is a technique for adding time-series luminance information of a coordinate (for example, a coordinate (x+1, y+1)) near or adjacent to the coordinate (x, y) to time-series luminance information of the coordinate (x, y) to calculate final time-series luminance information. The integration is a technique for improving an S/N in this way. That is, final time-series luminance information can include the time-series luminance information of the near coordinates.

As shown in FIG. 2, the storage circuit 21 is realized by, for example, a register in a logic circuit, a semiconductor memory element such as an SRAM, a DRAM (Dynamic Random Access Memory), and a flash memory, a hard disk, or an optical disk.

The storage circuit 21 includes an output buffer circuit 21a and an integral memory past frame result storage circuit 21b. The output buffer circuit 21a is a buffer of the signal output circuit 23. The integral memory past frame result storage circuit 21b stores a processing result of the signal processing circuit 22. The integral memory past frame result storage circuit 21b stores, for example, a distance measurement result (including luminance and a reliability degree).

FIG. 12 is a block diagram showing the configuration of the signal processing circuit 22. As shown in FIG. 12, the signal processing circuit 22 is configured by, for example, a logic circuit including an MPU (Micro Processing Unit). The signal processing circuit 22 measures a distance on the basis of a time difference between timing when the photodetector 17 detects the laser light L1 and timing when the sensor 18 detects the reflected light L2. That is, the signal processing circuit 22 is a processing circuit that generates, for each time-series luminance signal B1(x, y) (0≤x<HN, 0≤x<YN), a distance value corresponding to the time-series luminance signal B1(x, y). The signal processing circuit 22 includes a measurement signal generation circuit 24 and a measurement processing circuit 26. The signal output circuit (the output interface) 23 is connected to the components in the measurement circuit 300 and outputs a signal to an external circuit device such as the measurement information processing device 400.

The measurement signal generation circuit 24 generates a third time-series luminance signal B3(x, y) (0≤x<HN, 0≤x<YN) obtained by subtracting a second time-series luminance signal B2(x, y) (0≤x<HN, 0≤x<YN) corresponding to stray light based on laser light from the first time-series luminance signal B1(x, y) (0≤x<HN, 0≤x<YN). That is, the measurement signal generation circuit 24 includes a filter circuit 24a, an original signal generation circuit 24b, and a correction circuit 24c. Details of the measurement signal generation circuit 24 are explained below.

The measurement processing circuit 26 generates a distance value to the measurement target object 10 on the basis of the third time-series luminance signal B3(x, y) (0≤x<HN, 0≤x<YN). More specifically, the measurement processing circuit 26 measures the distance to the measurement target object 10 on the basis of a time difference between a point in time based on the irradiation of the laser light L1 and a point in time based on a peak position of a signal value of the third time-series luminance signal B3(x, y) (0≤x<HN, 0≤x<YN). In the following explanation, when common processing for the first time-series luminance signal B1(x, y) (0≤x<HN, 0≤x<YN) is explained, the first time-series luminance signal B1(x, y) (0≤x<HN, 0≤x<YN) is simply described as first time-series luminance signal B1. Similarly, the second time-series luminance signal B2(x, y) (0≤x<HN, 0≤x<YN) and the third time-series luminance signal B3(x, y) (0≤x<HN, 0≤x<YN) are simply described as second time-series luminance signal B2 and the third time-series luminance signal B3.

Stray light means unnecessary scattering of light that occurs inside the housing of the distance measuring device 5. For example, as reflection object, there is an optical member on the optical axes L1 and L2 inside the housing of the distance measuring device 5. As the optical member, there are cover glass, a mirror, a lens, a housing, and the like. The reflection object is not limited to the optical member and includes dust and the like adhering to the cover glass, the mirror, the lens, and the like. A light amount of the stray light is generally large. In some cases, the reflected light L2 from the measurement target object 10 is buried in the stray light and cannot be measured.

FIG. 13A is a diagram showing an example in which a white car and an oncoming car overlap in the measurement target object 10 during defocusing. As shown in FIG. 13A, when a white car, which is a high-reflection object, is present in front of the measurement target object 10 to overlap an oncoming car, which is the measurement target object 10, during defocusing, although different from the stray light, in some cases, the reflected light L2 from the measurement target object 10 is buried in high-reflected light of the white car and cannot be measured. When the measurement target object 10 is an automobile, such a high-reflection object is, for example, a white automobile, a metallic car, or the like. Consequently, for example, a phenomenon in which the sight of a blackish oncoming car hiding behind the white car is lost can occur.

FIG. 13B is a diagram showing an example in which the measurement target object 10 is a metallic car. The metallic car specularly reflects the laser light L1. Consequently, the laser light L1 is irradiated on the own car. The laser light L1 irradiated on the own car is reflected on the own car and further reflected on the high-reflection object such as the metallic car. In such a case, in some cases, reflected light from the metallic car is buried in the reflected light L2 from the own car and cannot be measured. Consequently, a phenomenon in which the sight of the metallic car is lost can occur. In this way, when the stray light or strong reflected light such as the reflected light from the high-reflection object overlaps the reflected light L2 from the measurement target object 10, in some cases, the reflected light L2 is buried in the stray light or the like and cannot be measured. The strong reflected light from the high-reflection object is the same in that the strong reflected light obstructs distance measurement by the reflected light L2. Therefore, in this specification, for simplification, reflected light including the strong reflected light other than the reflected light L2 is basically simply described as stray light.

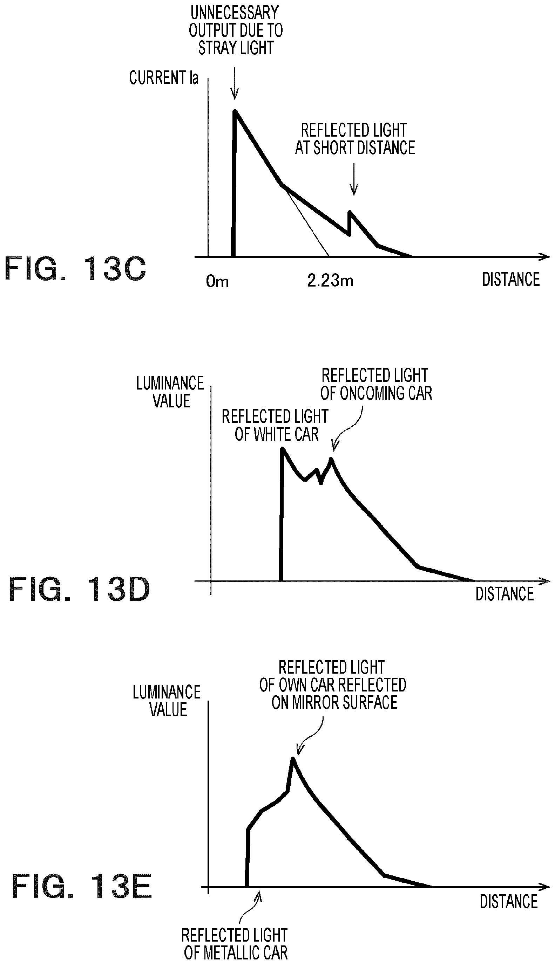

A problem in the case of occurrence of the stray light is explained in detail with reference to FIGS. 13C to 13E. FIG. 13C is a diagram showing an example of current and distance characteristics at the time when reflected light is reflected from a near distance during Geiger discharge by the stray light. The horizontal axis indicates a distance and the vertical axis indicates an electric current. As explained above, the electric current is amplified by a TIA and converted into voltage and is further converted into a digital signal by an AD converter. However, content of the electric current is still a signal representing a luminance value. Therefore, in the following explanation, the electric current is simply represented as a luminance value. In FIG. 13C, an elapsed time from laser light emission is indicated by a distance in terms of light speed.

In FIG. 13C, an example in which stray light is caused by dust or the like adhering to the cover glass, the mirror, the housing, and the cover of the distance measuring device 5 is shown. That is, Geiger discharge of the sensor 18 occurs in the position where a measurement distance is approximately 0 meter. As shown in FIG. 10, a recovery time after the occurrence of the Geiger discharge is decided by a time constant Tres=Rq×C. For example, in the case of the time constant Tres=15 ns, when the light speed is light speed c=299792458 m/s and a quenching time is converted into the distance to the measurement target object 10, the distance is calculated as 15ns×c/2=2.23 meters. Therefore, when the distance to the measurement target object 10 is smaller than 2.23 meters, a time-series luminance signal of reflected light from the measurement target object 10 is buried in a time-series luminance signal by stray light and cannot be measured. Since the stray light has high light intensity, actually, the influence of the stray light often occurs in a range in which, for example, the distance to the measurement target object 10 is 5 meters or less.

FIG. 13D is a diagram showing an example of luminance value and distance characteristics at the time when reflected light is reflected by a high-reflection object (for example, a white car). The horizontal axis indicates a distance and the vertical axis indicates a luminance value. In FIG. 13D, an elapsed time from laser light emission is indicated by a distance in terms of light speed. In this way, the time series luminance signal of the reflected light of the measurement target object 10 is buried in the time-series luminance signal by the high-reflection light and cannot be measured.

FIG. 13E is a diagram showing an example of luminance value and distance characteristics at the time when a reflection object (for example, a metallic car) including a mirror surface-like high-reflection surface is the measurement target object 10. The horizontal axis indicates a distance and the vertical axis indicates a luminance value. In this case, reflected light from the reflection object (for example, the metallic car) including the mirror surface-like high-reflection surface is present at a closer distance than reflected light of an own car. In this way, for example, a signal of the reflected light of the metallic car including the mirror surface-like high-reflection surface is buried in the reflected light of the own car and does not form a peak.

Details of the measurement signal generation circuit 24 are explained.

The filter circuit 24a performs filter processing for reducing noise of the first time-series luminance signal B1. The filter circuit 24a reduces the noise of the first time-series luminance signal B1 using, for example, a finite impulse response (FIR) filter.

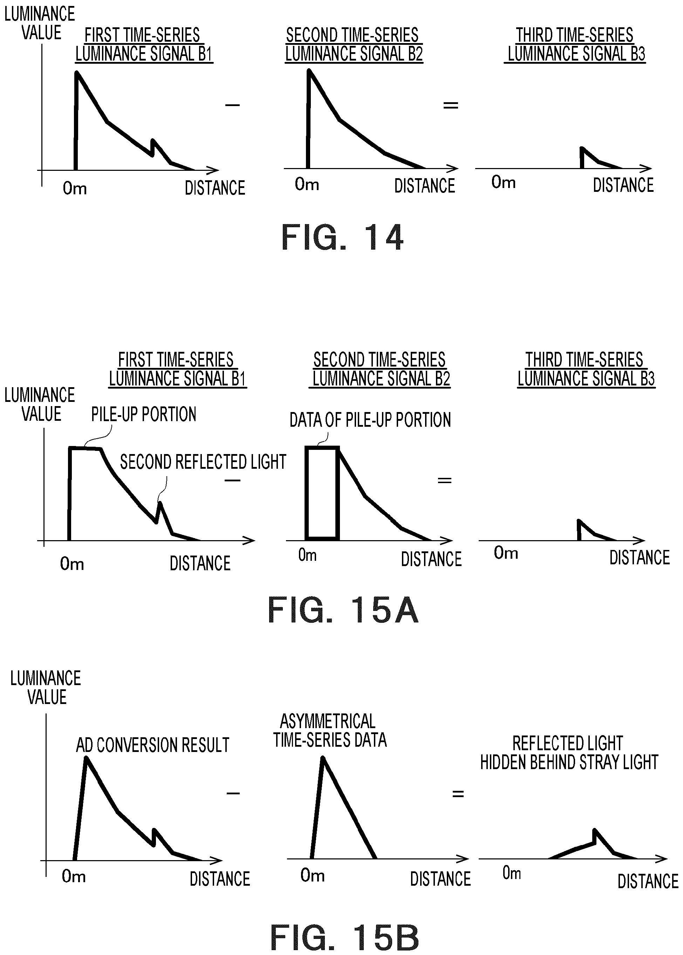

FIG. 14 is a diagram conceptually showing a processing example of the original signal generation circuit 24b. The vertical axis indicates a luminance value of a time-series luminance signal and the horizontal axis indicates a distance. That is, the horizontal axis indicates an elapsed time from laser light emission as a distance in terms of light speed. The first time-series luminance signal B1, the second time-series luminance signal B2, and the third time-series luminance signal B3 are shown in order from the left side.

As shown in FIG. 14, the original signal generation circuit 24b generates the third time-series luminance signal B3 obtained by subtracting the asymmetrical second time-series luminance signal B2 from the first time-series luminance signal B1. That is, the second time-series luminance signal B2 is equivalent to a time-series luminance signal obtained by converting an electric signal (FIG. 10) after the Geiger discharge with the signal generation circuit 20 into a digital signal. As explained above, a time-series change of the electric signal after the Geiger discharge is caused by a predetermined transition phenomenon on the basis of the time constant Tres=Rq×C decided by the characteristic of the light receiving element in the sensor 18. Therefore, when a peak value of the first time-series luminance signal B1 is determined, it is possible to estimate the time-series change of the electric signal after the Geiger discharge.

Consequently, the original signal generation circuit 24b generates the second time-series luminance signal B2 on the basis of the peak of the first time-series luminance signal B1 and the characteristic of the light receiving element used to acquire the first time-series luminance signal.

More specifically, the original signal generation circuit 24b reduces a value of the peak of the first time-series luminance signal B1 according to elapse of time and generates the second time-series luminance signal B2. For example, the original signal generation circuit 24b generates a second time-series luminance signal B2(t) according to Expression (1). In Expression (1), "$V_0$" is the value of the peak of the first time-series luminance signal B1, "$\Delta t$" is a sampling time of the signal generation circuit 20, and "n" is an integer equal to or larger than 0. As indicated by Expression (1), the original signal generation circuit 24b generates the second time-series luminance signal B2(t) as a digital signal on the basis of an exponential function of a time $\Delta t \times n$ having a value (1/e) smaller than 1 as a base and a predetermined number k1.

[Math 1]

$$B2(t)=V_0 e^{-k1 \times \Delta t \times n} \qquad (1)$$

[Math 2]

$$B2(t)=V_0 - k2 \times \Delta t \times n \qquad (2)$$

As indicated by Expression (2), the original signal generation circuit 24b subtracts, from the initial value V0, a value obtained by multiplying together the time $\Delta t \times n$ and the predetermined number k2 and generates the second time-series luminance signal B2(t) as a digital signal. In this way, the original signal generation circuit 24b subtracts the asymmetrical second time-series luminance signal B2 from the first time-series luminance signal B1 as a digital signal and generates the third time-series luminance signal B3. Consequently, it is possible to reduce the influence of the stray light and generate the third time-series luminance signal B3 caused by the measurement target object 10. Expression (2) is approximation of Expression (1). Compared with Expression (1), an error is large in estimation of an original signal. However, Expression (2) can be realized by less hardware and has a cost merit.

The stray light is generally caused by an optical member inside the housing of the distance measuring device 5, dust or the like on the inside of the distance measuring device 5, or dust or the like floating in a space at a very close distance from an emitter of the irradiation optical system 202 (FIG. 2). Therefore, the original signal generation circuit 24b generates the asymmetrical second time-series luminance signal B2 on the basis of a peak of the first time-series luminance signal B1 generated within a predetermined time from emission timing of the laser light L1. For example, the original signal generation circuit 24b generates the asymmetrical second time-series luminance signal B2 on the basis of a peak of the first time-series luminance signal B1 generated in a time of, for example, 0.2 ns (equivalent to 0.6 meter) from the emission timing of the laser light L1. A rising time of a response signal of the silicon photomultiplier is approximately 0.2 ns or less.

On the other hand, when a peak of the first time-series luminance signal B1 is not generated within the predetermined time, for example, in 0.2 ns or less from the emission timing of the laser light L1, the original signal generation circuit 24b determines that stray light has not occurred and suppresses the subtraction of the second time-series luminance signal. Consequently, when the measurement target object 10 is present in a position at a near distance, for example, approximately 3 meters, it is possible to prevent reflected light from the measurement target object 10 from being processed as stray light.

FIG. 15A is a diagram conceptually showing a processing example in a state in which the first time-series luminance signal B1 piles up. The vertical axis indicates a luminance value of a time-series luminance signal and the horizontal axis indicates a distance. That is, the horizontal axis indicates an elapsed time from laser light emission as a distance in terms of light speed. The first time-series luminance signal B1, the second time-series luminance signal B2, and the third time-series luminance signal B3 are shown in order from the left side.

As explained above, the sensor 18 (FIG. 2) according to this embodiment is configured by a plurality of SPADs. A relation between the number of light receiving photons per unit time and an output value of the sensor has a linear characteristic when the number of light receiving photons per unit time is small. On the other hand, when the number of light receiving photons per unit time increases, the output value of the sensor is saturated. The relation between the number of light receiving photons per unit time and the output value of the sensor has a nonlinear characteristic. Therefore, as shown in the left figure of FIG. 15A, in some cases, a peak of the first time-series luminance signal B1 is generated as a constant value or generated as a gentle peak. Such a state in which the output value is saturated is called pile-up. A region of the saturation is called pile-up portion.

When the pile-up occurs in the first time-series luminance signal B1, the original signal generation circuit 24b removes a time-series luminance signal in the pile-up portion and generates a new first time-series luminance signal B1. As shown in FIG. 14, the original signal generation circuit 24b generates the second time-series luminance signal B2 on the basis of a peak of the new first time-series luminance signal B1. For example, when the first time-series luminance signal B1 exceeds a predetermined value, the original signal generation circuit 24b generates the third time-series luminance signal B3 as a digital signal value on the basis of the first time-series luminance signal B1 equal to or smaller than the predetermined value and the asymmetrical second time-series luminance signal B2 based on the predetermined value. Consequently, even when the pile-up occurs, it is possible to more highly accurately generate the third time-series luminance signal B3.

When a value of the first time-series luminance signal B1 exceeds the predetermined value, the original signal generation circuit 24b according to this embodiment determines that pile-up has occurred. However, the determination of the pile-up is not limited to this. For example, the original signal generation circuit 24b calculates time differential of the first time-series luminance signal B1 in a predetermined range including a maximum of the first time-series luminance signal B1 and, when the time differential is equal to or smaller than a predetermined value, determines that pile-up has occurred.

FIG. 15B is a diagram conceptually showing a processing example at the time when a longer time is required for rising of the first time-series luminance signal B1. The vertical axis indicates a luminance value of a time-series luminance signal and the horizontal axis indicates a distance. That is, the horizontal axis indicates an elapsed time from laser light emission as a distance in terms of light speed. The first time-series luminance signal B1, the second time-series luminance signal B2, and the third time-series luminance signal B3 are shown in order from the left side. As shown in FIG. 15B, a longer time is sometimes required for rising of the first time-series luminance signal B1 than rising of the general first time-series luminance signal B1 (for example, FIG. 14) because of the influence of parasitic resistance, capacitance, or the like.

[Math 3]

$$B2(t)=k3\times\Delta t\times n \qquad (3)$$

In this case, first, the original signal generation circuit 24b generates, for a period of rising, a monotonously increasing second time-series luminance signal B2 represented by Expression (3). Subsequently, the original signal generation circuit 24b generates, for a period of falling, a monotonously decreasing second time-series luminance signal B2 represented by Expression (2). Usually, the absolute value of k3 is larger than the absolute value of k2 (Expression (2)) and a tilt is steeper in the rising. The original signal generation circuit 24b subtracts the asymmetrical second time-series luminance signal B2 from the first time-series luminance signal B1 and generates the third time-series luminance signal B3 as a digital signal value. When the second time-series luminance signal B2 is generated by only Expression (2), it is likely that a signal in a portion of the rising of the first time-series luminance signal B1 remains without being deleted and a false peak signal (wrong measurement) occurs. Therefore, a portion including the portion of the rising of the first time-series luminance signal B1 is deleted and the likelihood of the wrong measurement is reduced by using Expression (3).

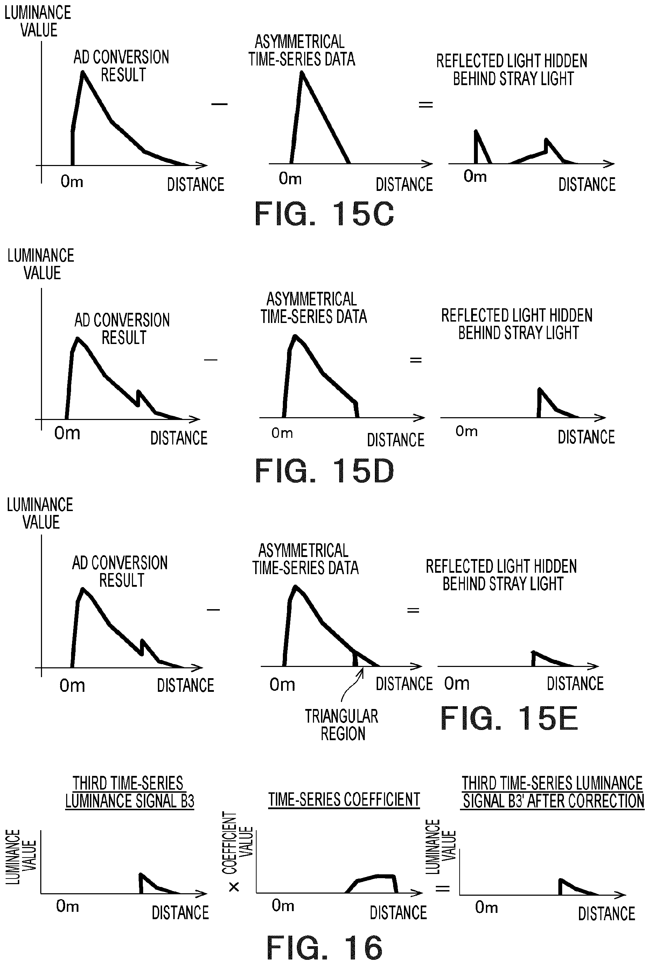

FIG. 15C is a diagram conceptually showing a processing example of the first time-series luminance signal B1 obtained by measuring a mirror surface-like measurement target (for example, a metallic car). For example, the first time-series luminance signal B1 is, for example, a signal obtained in a situation shown in FIG. 13B. The vertical axis indicates a luminance value of a time-series luminance signal and the horizontal axis indicates a distance. That is, the horizontal axis indicates an elapsed time from laser light emission in terms of light speed. The first time-series luminance signal B1, the second time-series luminance signal B2, and the third time-series luminance signal B3 are shown in order from the left side. The first time-series luminance signal B1 is, for example, a signal obtained in the situation shown in FIG. 13B. A signal on a short-distance side is the third time-series luminance signal B3 based on the reflected light L2 from the mirror surface-like measurement target object 10. A signal on a long-distance side is the third time-series luminance signal B3 based on the reflected light L2 from the own car.

As shown in FIG. 15C, the rising of the first time-series luminance signal B1 shows a more gentle curved line shape. This swell-like curved line shape is formed by reflected light from a mirror surface. A peak portion is caused by, for example, reflected light of the own vehicle reflected on the mirror surface and stray light. Usually, the former swell is a target desired to be measured. However, the former swell is highly likely to be overlooked by a measuring method of simply calculating a peak in the past. On the other hand, the second time-series luminance signal B2 is generated using Expression (3) for a period of rising and using Expression (2) for a period of falling. When the third time-series luminance signal B3 is generated by subtracting the second time-series luminance signal B2 from the first time-series luminance signal B1, it is possible to prevent the reflected light from the mirror surface from being overlooked.

FIG. 15D is a diagram conceptually showing a processing example of the first time-series luminance signal B1 at the time when the influence of parasitic resistance and capacitance is larger. The vertical axis indicates a luminance value of a time-series luminance signal and the horizontal axis indicates a distance. That is, the horizontal axis indicates an elapsed time from laser light emission as a distance in terms of light speed. The first time-series luminance signal B1, the second time-series luminance signal B2, and the third time-series luminance signal B3 are shown in order from the left side.

As shown in FIG. 15D, when the first time-series luminance signal B1 is further affected by parasitic resistance and capacitance, the first time-series luminance signal B1 has a shape of an obtuse graph not having a sharp peak portion. In that case, a signal generated using Expressions (1) to (3) is different from an actual signal in that the signal is obtuse. Therefore, instead of using Expressions (1) to (3), the original signal generation circuit 24b segments a region of a skirt of the first time-series luminance signal B1 and generates the region as the third time-series luminance signal B3. More specifically, the original signal generation circuit 24b detects a peak and generates, as the second time-series luminance signal B2, a signal row in a section from a trough before the peak and a trough before the next peak. Positions of the troughs can be calculated by a time primary differential value and a time secondary differential value of the first time-series luminance signal B1. For example, a maximum point of the secondary differential value before the peak corresponds to the trough. Consequently, it is possible to remove all obtuse signals of the first time-series luminance signal B1 and generate the third time-series luminance signal B3 based on reflected light from a target object. However, since only the section from the trough before the peak to the next trough is segmented, the spread ahead of the skirt remains without being removed. The third time-series luminance signal B3 shows a tendency of having a rather high peak. A processing example for improving this problem is an example shown in FIG. 15E. In general, small unevenness due to electric noise or the like is present in a signal. Since such small unevenness is not a peak or a trough of a detection target, measures for not detecting the small unevenness are taken (for example, neglecting one increase or decrease equal to or smaller than a certain threshold).

FIG. 15E is a diagram conceptually showing a processing example of a region ahead of the skirt of the first time-series luminance signal B1. The vertical axis indicates a luminance value of a time-series luminance signal and the horizontal axis indicates a distance. That is, the horizontal axis indicates an elapsed time from laser light emission as a distance in terms of light speed. The first time-series luminance signal B1, the second time-series luminance signal B2, and the third time-series luminance signal B3 are shown in order from the left side.

The original signal generation circuit 24b includes, in the second time-series luminance signal B2, a portion of the spread ahead of the skirt, that is, a triangular region. Consequently, a signal of the triangular region is also subtracted from the first time-series luminance signal B1. The height of a peak of the third time-series luminance signal B3 has a more accurate value. Consequently, it is possible to perform more proper measurement. The height of the peak is used for calculation of a reliability degree. Higher accuracy is obtained.

FIG. 16 is a diagram conceptually showing a processing example of the correction circuit 24c. The vertical axis of a left figure indicates a luminance value of a time-series luminance signal. The vertical axis of the middle figure indicates a coefficient value of a time-series coefficient. The vertical axis of the right figure indicates a luminance value of a time-series luminance signal. The horizontal axis indicates a distance. That is, the horizontal axis indicates an elapsed time from laser light emission as a distance in terms of light speed.

As shown in FIG. 16, the correction circuit 24c multiplies the third time-series luminance signal B3 by a time-series coefficient to generate a new third time-series luminance signal B3'. That is, after subtracting the second time-series luminance signal B2 from the first time-series luminance signal B1 to generate the third time-series luminance signal B3, the correction circuit 24c multiplies the third time-series luminance signal B3 by the time-series coefficient to generate the third time-series luminance signal B3'. Consequently, nonlinear distortion of the third time-series luminance signal B3 caused by overlap with the second time-series luminance signal B2 can be corrected.

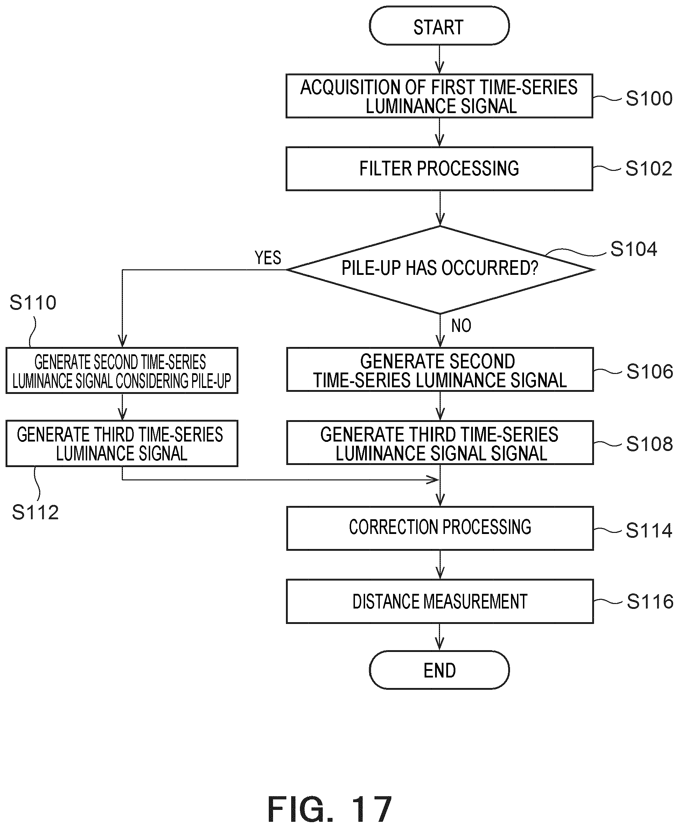

FIG. 17 is a flowchart showing a processing example of the distance measuring device 5 according to this embodiment. Processing after the generation of the first time-series luminance signal B1 by the signal generation circuit 20 is explained.

The signal processing circuit 22 acquires the first time-series luminance signal B1 from the signal generation circuit 20 (step S100). Subsequently, the filter circuit 24a performs filter processing for reducing noise of the first time-series luminance signal B1 (step S102).

Subsequently, the original signal generation circuit 24b determines whether pile-up has occurred in the first time-series luminance signal B1 (step S104). When determining that pile-up has not occurred (NO in step S104), the original signal generation circuit 24b generates the second time-series luminance signal B2 based on a peak value of the first time-series luminance signal B1 (step S106). Subsequently, the original signal generation circuit 24b subtracts the second time-series luminance signal B2 from the first time-series luminance signal B1 to generate the third time-series luminance signal B3 (step S108).

On the other hand, when determining that pile-up has occurred (YES in step S104), the original signal generation circuit 24b generates the asymmetrical time-series luminance signal B2 based on a predetermined value (step S110). Subsequently, the original signal generation circuit 24b subtracts the second time-series luminance signal B2 from the first time-series luminance signal B1 equal to or smaller than the predetermined value to generate the third time-series luminance signal B3 (step S112).

Subsequently, the correction circuit 24c multiplies the third time-series luminance signal B3 by a time-series coefficient to generate the new third time-series luminance signal B3' (step S114). The measurement processing circuit 26 generates a distance value to the measurement target object 10 on the basis of the third time-series luminance signal B3' (step S116).

As explained above, with the distance measuring device 5 according to this embodiment, the signal processing circuit 22 generates the third time-series luminance signal B3 obtained by subtracting, from the first time-series luminance signal B1, the second time-series luminance signal B2 corresponding to stray light based on laser light. Consequently, even when stray light occurs, it is possible to reduce the influence of the stray light and more highly accurately perform measurement of the distance to the measurement target object 10.

(Second Embodiment)

The distance measuring device 5 according to a second embodiment is different from the distance measuring device 5 according to the first embodiment in that the distance measuring device 5 according to the second embodiment generates the third time-series luminance signal B3 after integrating a plurality of first time-series luminance signals B1 obtained by digitizing the reflected light L2 of the laser light L1 irradiated in a plurality of directions. In the following explanation, the difference from the distance measuring device 5 according to the first embodiment is explained.

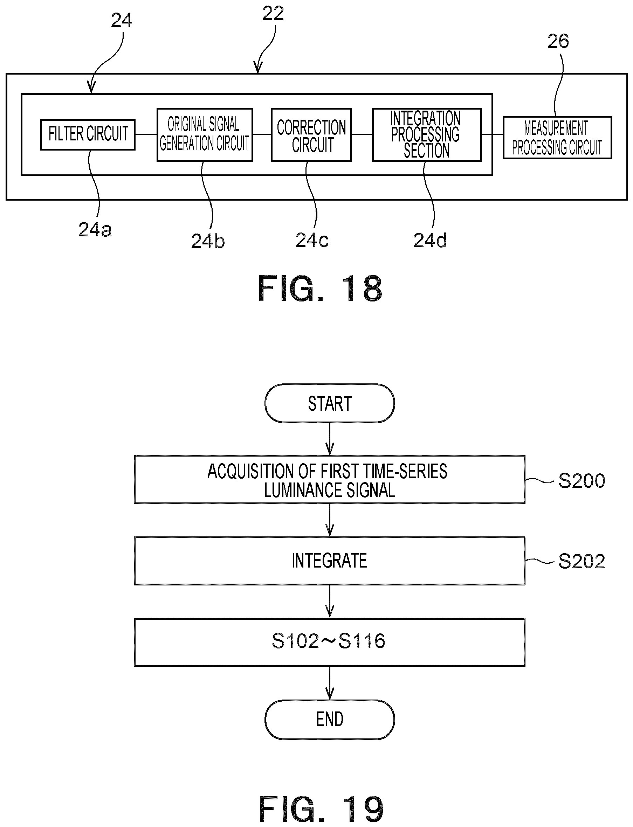

FIG. 18 is a block diagram showing the configuration of the signal processing circuit 22 according to the second embodiment. As shown in FIG. 18, an integration processing circuit 24d according to the second embodiment generates a weight value of a first time-series luminance signal B1n on the basis of similarity between a first time-series luminance signal B11 obtained by digitizing the reflected light L2 of the laser light L1 irradiated in a first irradiation direction and a first time-series luminance signal B1n obtained by digitizing the reflected light L2 of the laser light L1 irradiated in an n-th irradiation direction different from the first irradiation direction, the first time-series luminance signal B11 and the first time-series luminance signal B1n being stored in the storage circuit 21: n is a natural number from 2 to N. The integration processing circuit 24d accumulates, on the first time-series luminance signal B11, a signal obtained by weighting the first time-series luminance signal B1n with the weight value and generates the first time-series luminance signal B1. The magnitude of the first time-series luminance signal B1 may be normalized.

FIG. 19 is a flowchart showing a processing example of the distance measuring device 5 according to the second embodiment. An example in which the first time-series luminance signal B1n in a coordinate range of 5×5 is integrated is explained. That is, n is 1 to 25.

The signal processing circuit 22 acquires the first time-series luminance signal B11 to a first time-series luminance signal B125 from the storage circuit 21 (step S200). Subsequently, the integration processing circuit 24d accumulates, on the first time-series luminance signal B11, signals obtained by respectively weighting the first time-series luminance signal B12 to the first time-series luminance signal B125 and generates the first time-series luminance signal B1 (step S202). Subsequently, the signal processing circuit 22 performs processing equivalent to the processing in steps S102 to S116 (FIG. 17). In this way, the signal processing circuit 22 applies averaging processing to a plurality of first time-series luminance signals B1n and generates the first time-series luminance signal B1.

As explained above, with the distance measuring device 5 according to this embodiment, the integration processing circuit 24d accumulates, on the first time-series luminance signal B11, the first time-series luminance signal B1n weighted by the weight value and generates the first time-series luminance signal B1. Consequently, it is possible to generate the third time-series luminance signal B3 in which the influence of a time-series luminance signal caused by stray light is suppressed from the first time-series luminance signal B1 having reduced noise. Therefore, it is possible to suppress the influence of noise and more accurately and stably measure the distance to the measurement target object 10 on the basis of a time difference between timing of a peak position of the third time-series luminance signal B3 and irradiation timing of laser light.

(First modification of the second embodiment)

The distance measuring device 5 according to a first modification of the second embodiment is different from the distance measuring device 5 according to the second embodiment in that the distance measuring device 5 according to the first modification of the second embodiment generates third time-series luminance signals B3n with respect to the respective plurality of first time-series luminance signals B1n obtained by digitizing the reflected light L2 of the laser light L1 irradiated in a plurality of directions, integrates the third time-series luminance signals B3n, and generates the third time-series luminance signal B3. In the following explanation, the difference from the distance measuring device 5 according to the second embodiment is explained.

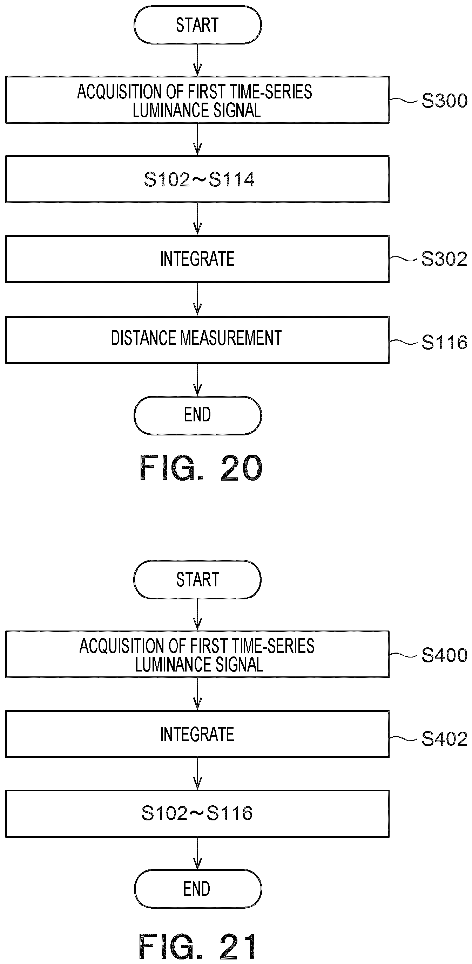

FIG. 20 is a flowchart showing a processing example of the distance measuring device 5 according to the first modification of the second embodiment. An example in which the third time-series luminance signal B3n is generated from the first time-series luminance signal B1n in a coordinate range of 5×5 is explained. That is, n is 1 to 25.

The signal processing circuit 22 acquires the first time-series luminance signal B11 to the first time-series luminance signal B125 from the storage circuit 21 (step S300). Subsequently, the signal processing circuit 22 performs processing equivalent to the processing in steps S102 to S114 (FIG. 17) on the respective first time-series luminance signals B11 to B125. Consequently, a third time-series luminance signal B31 to a third time-series luminance signal B325 are generated. The integration processing circuit 24d generates a weight value of the third time-series luminance signal B3n on the basis of similarity between the third time-series luminance signal B31 and the third time-series luminance signal B3n: n is a natural number from 2 to 25.

The integration processing circuit 24d accumulates, on the third time-series luminance signal B31, signals obtained by weighting the respective third time-series luminance signals B31 to B325 with the weight value and generates the third time-series luminance signal B3 (step S302). The measurement processing circuit 26 generates a distance value to the measurement target object 10 on the basis of the third time-series luminance signal B3 (step S116).

In this way, the signal processing circuit 22 generates a plurality of third time-series luminance signals B31 to B325 with respect to a respective plurality of first time-series luminance signals B11 to B125, applies averaging processing to the plurality of third time-series luminance signals B31 to B325, and generates the third time-series luminance signal B3. In general, in a time-series luminance signal obtained by performing processing for subtracting a second time-series luminance signal, further calculating time differential of the first time-series luminance signal B1, and calculating and subtracting a skirt of a peak (for example, FIGS. 15D and 15E), there is a tendency that a pseudo peak based on noise occurs. However, such a signal based on the noise can be effectively suppressed by the averaging processing. Therefore, it is possible to generate a more highly accurate third time-series luminance signal B3 by continuously performing the original signal generation/correction and the integration (averaging) processing as in this modification.

As explained above, with the distance measuring device 5 according to this modification, the integral processing circuit 24d accumulates, on the third time-series luminance signal B31, the third time-series luminance signal B1n weighted by the weight value and generates the third time-series luminance signal B3. Consequently, it is possible to generate the third time-series luminance signal B3 having reduced noise on the basis of the plurality of third time-series luminance signals B31 to B325 in which the influence of the time-series luminance signal caused by the stray light is suppressed. Therefore, it is possible to suppress the influence of noise and more accurately and stably measure the distance to the measurement target object 10 on the basis of a time difference between timing of a peak position of the third time-series luminance signal B3 and irradiation timing of laser light.

(Second modification of the second embodiment)

The distance measuring device 5 according to a second modification of the second embodiment is different from the distance measuring device 5 according to the second embodiment in that the distance measuring device 5 according to the second modification of the second embodiment generates third time-series luminance signals B3 after integrating a plurality of first time-series luminance signals B1n obtained by digitizing the reflected light L2 of the laser light L1 irradiated a plurality of times in the same direction. In the following explanation, the difference from the distance measuring device 5 according to the second embodiment is explained.

FIG. 21 is a flowchart showing a processing example of the distance measuring device 5 according to the second modification of the second embodiment. An example in which the first time-series luminance signals B1n obtained by digitizing the reflected light L2 of the laser light L1 irradiated five times in the same direction are integrated is explained. That is, n is 1 to 5.

The signal processing circuit 22 acquires the first time-series luminance signal B11 to the first time-series luminance signal B15 from the storage circuit 21 (step S400). Subsequently, the integration processing circuit 24d accumulates signals obtained by weighting the respective first time-series luminance signals B11 to B15 with a weight value and generates the third time-series luminance signal B3 (step S402). Subsequently, the signal processing circuit 22 performs processing equivalent to the processing in steps S102 to S116 (FIG. 17). In this way, the signal processing circuit 22 applies averaging processing to a plurality of time-series luminance signals B1n corresponding to respective laser lights L1 irradiated at a different plurality of timings and generates the first time-series luminance signal B1.

As explained above, with the distance measuring device 5 according to this modification, the integration processing circuit 24d applies averaging processing to a plurality of time-series luminance signals B1n corresponding to respective laser lights L1 irradiated in the same direction at a different plurality of timings and generates the first time-series luminance signals B1. Consequently, it is possible to generate the third time-series luminance signal B3 in which the influence of a time-series luminance signal caused by stray light is suppressed from the first time-series luminance signal B1 having reduced noise. Therefore, it is possible to, without being affected by noise, accurately and stably measure the distance to the measurement target object 10 on the basis of a time difference between timing of a peak position of the third time-series luminance signal B3 and irradiation timing of laser light.

(Third modification of the second embodiment)

The distance measuring device 5 according to a third modification of the second embodiment is different from the distance measuring device 5 according to the second embodiment in that the distance measuring device 5 according to the third modification of the second embodiment generates third time-series luminance signals B3n with respect to a respective plurality of first time-series luminance signals B1n obtained by digitizing the reflected light L2 of the laser light L1 irradiated a plurality of times in the same direction, integrates the third time-series luminance signals B3n, and generates the third time-series luminance signal B3. In the following explanation, the difference from the distance measuring device 5 according to the second embodiment is explained.

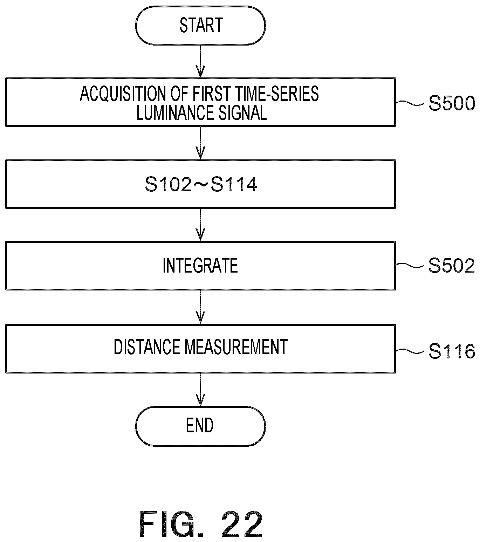

FIG. 22 is a flowchart showing a processing example of the distance measuring device 5 according to the third modification of the second embodiment. An example in which the third time-series luminance signals B3n are generated from the first time-series luminance signals B1n obtained by digitizing the reflected light L2 of the laser light L1 irradiated five times in the same direction is explained. That is, n is 1 to 5.

The signal processing circuit 22 acquires the first time-series luminance signal B11 to the first time-series luminance signal B15 from the storage circuit 21 (step S500). Subsequently, the signal processing circuit 22 performs processing equivalent to the processing in steps S102 to S114 (FIG. 17) on the respective first time-series luminance signals B11 to B15. Consequently, the third time-series luminance signal B31 to the third time-series luminance signal B35 are generated.

Subsequently, the integration processing circuit 24d accumulates signals obtained by weighting the respective third time-series luminance signals B31 to B35 with a weight value and generates the third time-series luminance signal B3 (step S502). The measurement processing circuit 26 generates a distance value to the measurement target object 10 on the basis of the third time-series luminance signal B3 (step S116). In this way, the signal processing circuit 22 generates a plurality of third time-series luminance signals B31 to B35 with respect to a respective plurality of first time-series luminance signals B11 to B15, applies averaging processing to the plurality of third time-series luminance signals B31 to B35, and generates the third time-series luminance signal B3.

As explained above, with the distance measuring device 5 according to this modification, the integral processing circuit 24d accumulates the plurality of third time-series luminance signals B31 to B35 and generates the third time-series luminance signal B3. Consequently, it is possible to generate the third time-series luminance signal B3 having reduced noise on the basis of the plurality of third time-series luminance signals B31 to B35 in which the influence of the time-series luminance signal caused by the stray light is suppressed. Therefore, it is possible to, without being affected by noise, accurately and stably measure the distance to the measurement target object 10 on the basis of a time difference between timing of a peak position of the third time-series luminance signal B3 and irradiation timing of laser light.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A distance measuring device(5) that processes a first time-series luminance signal generated on the basis of a sensor output corresponding to reflected light of laser light, the distance measuring device comprising:

   a measurement signal generation circuit(24) configured to generate a third time-series luminance signal obtained by subtracting, from the first time-series luminance signal, a second time-series luminance signal corresponding to reflected light from outside a measurement target object based on the laser light; and
   a measurement processing circuit(26) configured to generate a distance value to the measurement target object on the basis of the third time-series luminance signal.

2. The distance measuring device(5) according to claim 1, wherein the measurement signal generation circuit(24) generates the second time-series luminance signal, which is asymmetrical, on the basis of a peak of the first time-series luminance signal generated in a predetermined time from emission timing of the laser light.

3. The distance measuring device(5) according to any of claims 1-2, wherein the measurement signal generation circuit(24) generates the second time-series luminance signal, which is asymmetrical, on the basis of a peak of the first time-series luminance signal and a characteristic of a light receiving element used to acquire the first time-series luminance signal.

4. The distance measuring device(5) according to any of claims 1-3,
   wherein the measurement signal generation circuit(24) reduces a value of a peak of the first time-series luminance signal according to elapse of time and generates the second time-series luminance signal.

5. The distance measuring device(5) according to claim 4, wherein the measurement signal generation circui(24)t generates the second time-series luminance signal on the basis of the value of the peak an exponential function of a time having a value smaller than 1 as a base and a predetermined number.

6. The distance measuring device(5) according to claim 4, wherein the measurement signal generation circuit subtracts a value obtained by multiplying together a time and a predetermined number from the value of the peak and generates the second time-series luminance signal.

7. The distance measuring device(5) according to claim 4, wherein the measurement signal generation circuit(24) adds up a value obtained by multiplying together a time and a predetermined value and a constant and generates the second time-series luminance signal.

8. The distance measuring device(5) according to any of claims 1-3, wherein the measurement signal generation circuit(24) generates the third time-series luminance signal on the basis of a signal of a skirt region of the first time-series luminance signal.

9. The distance measuring device(5) according to any of claims 1-6, wherein, when the first time-series luminance signal exceeds a predetermined value, the measurement signal generation circuit (24)generates the third time-series luminance signal on the basis of the first time-series luminance signal equal to or smaller than the predetermined value and the second time-series luminance signal, which is asymmetrical, based on the predetermined value.

10. The distance measuring device(5) according to any of claims 1-9, wherein the measurement signal generation circuit(24) generates the third time-series luminance signal after performing finite impulse response filter processing on the first time-series luminance signal.

11. The distance measuring device(5) according to any of claims 1-10, wherein the measurement signal generation circuit(24) subtracts the second time-series luminance signal from the first time-series luminance signal and thereafter multiplies a signal obtained by subtracting the second time-series luminance signal from the first time-series luminance signal by a time-series constant to generate the third time-series luminance signal.

12. The distance measuring device(5) according to any of claims 1-9, wherein the measurement signal generation circuit(24) acquires a plurality of the first time-series luminance signals corresponding to a respective plurality of the laser lights irradiated in different directions, applies averaging processing to the plurality of first time-series luminance signals, and generates the first time-series luminance signal.

13. The distance measuring device(5) according to any of claims 1-9, wherein the measurement signal generation circuit(24) acquires a plurality of the first time-series luminance signals corresponding to a respective plurality of the laser lights irradiated in different directions, generates a plurality of the third time-series luminance signals with respect to the respective plurality of first time-series luminance signals, applies averaging processing to the plurality of third time-series luminance signals, and generates the third time-series luminance signal.

14. The distance measuring device(5) according to claim any of claims 1-13, wherein the measurement signal generation circui(24)t acquires a plurality of the first time-series luminance signals corresponding to a respective plurality of the laser lights irradiated at a different plurality of timings, applies averaging processing to the plurality of first time-series luminance signals, and generates the first time-series luminance signal.

15. A distance measuring method comprising:

acquiring a first time-series luminance signal generated on the basis of a sensor output corresponding to reflected light of laser light; generating a third time-series luminance signal obtained by subtracting, from the first time-series luminance signal, a second time-series luminance signal corresponding to reflected light from outside a measurement target object based on the laser light; and generating a distance value to the measurement target object on the basis of the third time-series luminance signal.

FIG. 1

FIG. 2

FIG. 3

FIG. 4

FIG. 5

FIG. 6

FIG. 7A

## FIG. 7B

## FIG. 7C

FIG. 8

FIG. 9

FIG. 10

SAMPLING VALUE
(LUMINANCE)

NOISE

PEAK BASED ON
REFLECTED LIGHT L2

t0  t2  t4  t6  t8  t10                    t32  SAMPLING
  t1  t3  t5  t7  t9                                 TIMING
                    TL2(n)                        (DISTANCE)

## FIG. 11

24                22                              26

| FILTER CIRCUIT | ORIGINAL SIGNAL GENERATION CIRCUIT | CORRECTION CIRCUIT |  | MEASUREMENT PROCESSING CIRCUIT |

24a              24b              24c              FIG. 12

WHITE CAR  ONCOMING CAR

ONCOMING CAR 10

## FIG. 13A

METALLIC CAR

OWN CAR

## FIG. 13B

UNNECESSARY
OUTPUT DUE TO
STRAY LIGHT

CURRENT Ia

REFLECTED LIGHT
AT SHORT DISTANCE

**FIG. 13C**

0m       2.23m       DISTANCE

LUMINANCE
VALUE

REFLECTED LIGHT
OF ONCOMING CAR

REFLECTED LIGHT
OF WHITE CAR

**FIG. 13D**

DISTANCE

LUMINANCE
VALUE

REFLECTED LIGHT
OF OWN CAR REFLECTED
ON MIRROR SURFACE

**FIG. 13E**

DISTANCE

REFLECTED LIGHT
OF METALLIC CAR

LUMINANCE
VALUE

FIRST TIME-SERIES
LUMINANCE SIGNAL B1

SECOND TIME-SERIES
LUMINANCE SIGNAL B2

THIRD TIME-SERIES
LUMINANCE SIGNAL B3

−

=

0m          DISTANCE

0m          DISTANCE

0m          DISTANCE

## FIG. 14

FIRST TIME-SERIES
LUMINANCE SIGNAL B1

SECOND TIME-SERIES
LUMINANCE SIGNAL B2

THIRD TIME-SERIES
LUMINANCE SIGNAL B3

LUMINANCE
VALUE          PILE-UP PORTION

DATA OF PILE-UP PORTION

SECOND REFLECTED LIGHT

−

=

0m          DISTANCE

0m          DISTANCE

0m          DISTANCE

## FIG. 15A

LUMINANCE
VALUE

AD CONVERSION RESULT

ASYMMETRICAL
TIME-SERIES DATA

REFLECTED LIGHT
HIDDEN BEHIND STRAY LIGHT

−

=

0m          DISTANCE

0m          DISTANCE

0m          DISTANCE

## FIG. 15B

24

FIG. 15C

FIG. 15D

FIG. 15E

FIG. 16

START

ACQUISITION OF FIRST TIME-SERIES
LUMINANCE SIGNAL — S100

FILTER PROCESSING — S102

PILE-UP HAS OCCURRED? — S104

YES

NO

S110

GENERATE SECOND TIME-SERIES
LUMINANCE SIGNAL CONSIDERING PILE-UP

GENERATE SECOND
TIME-SERIES LUMINANCE SIGNAL — S106

GENERATE THIRD TIME-SERIES
LUMINANCE SIGNAL

GENERATE THIRD TIME-SERIES
LUMINANCE SIGNAL SIGNAL — S108

S112

CORRECTION PROCESSING — S114

DISTANCE MEASUREMENT — S116

END

FIG. 17

| | | | | |
|---|---|---|---|---|
| FILTER CIRCUIT | ORIGINAL SIGNAL GENERATION CIRCUIT | CORRECTION CIRCUIT | INTEGRATION PROCESSING SECTION | MEASUREMENT PROCESSING CIRCUIT |

24     22     26

24a     24b     24c     24d

# FIG. 18

START

| ACQUISITION OF FIRST TIME-SERIES LUMINANCE SIGNAL | S200 |
|---|---|

| INTEGRATE | S202 |
|---|---|

| S102~S116 |
|---|

END

# FIG. 19

START

ACQUISITION OF FIRST TIME-SERIES LUMINANCE SIGNAL — S300

S102~S114

INTEGRATE — S302

DISTANCE MEASUREMENT — S116

END

# FIG. 20

START

ACQUISITION OF FIRST TIME-SERIES LUMINANCE SIGNAL — S400

INTEGRATE — S402

S102~S116

END

# FIG. 21

START

↓

ACQUISITION OF FIRST TIME-SERIES
LUMINANCE SIGNAL  — S500

↓

S102~S114

↓

INTEGRATE  — S502

↓

DISTANCE MEASUREMENT  — S116

↓

END

# FIG. 22

Europäisches Patentamt
European Patent Office
Office européen des brevets

# EUROPEAN SEARCH REPORT

Application Number

EP 20 18 7666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/115247 A1 (LEDDARTECH INC [CA]) 6 July 2017 (2017-07-06) * paragraphs [0049] - [0052], [0076] - [0077]; claim 1; figures 1a,6 * ----- | 1-15 | INV. G01S7/487 G01S17/10 G01S17/89 G01S17/931 |
| X | US 2004/130702 A1 (JUPP DAVID L [AU] ET AL) 8 July 2004 (2004-07-08) * Section 2.1; paragraphs [0273] - [0274], [0478] - [0480]; figures 2.1, 2.2 * ----- | 1-15 | |
| X | US 2018/253404 A1 (MOORE JOHN KEVIN [GB] ET AL) 6 September 2018 (2018-09-06) * paragraphs [0054] - [0056], [0083] - [0093], [0120] - [0142]; figures 1-5 * ----- | 1-15 | |
| A | EP 3 457 177 A1 (TOSHIBA KK [JP]; TOSHIBA ELECTRONIC DEVICES & STORAGE CORP [JP]) 20 March 2019 (2019-03-20) * paragraphs [0039] - [0040], [0046] - [0048]; figures 3,4 * ----- | 12-14 | TECHNICAL FIELDS SEARCHED (IPC) G01S |

The present search report has been drawn up for all claims

| Place of search | Date of completion of the search | Examiner |
|---|---|---|
| Munich | 20 November 2020 | Theißing, Nikolaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 20 18 7666

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2020

| Patent document cited in search report | | Publication date | Patent family member(s) | | Publication date |
|---|---|---|---|---|---|
| WO 2017115247 | A1 | 06-07-2017 | CA | 3009722 A1 | 06-07-2017 |
| | | | CA | 3009869 A1 | 06-07-2017 |
| | | | EP | 3397985 A1 | 07-11-2018 |
| | | | EP | 3397986 A1 | 07-11-2018 |
| | | | US | 2019004158 A1 | 03-01-2019 |
| | | | US | 2019011543 A1 | 10-01-2019 |
| | | | WO | 2017115247 A1 | 06-07-2017 |
| | | | WO | 2017115258 A1 | 06-07-2017 |
| US 2004130702 | A1 | 08-07-2004 | AT | 459016 T | 15-03-2010 |
| | | | CA | 2437897 A1 | 22-08-2002 |
| | | | CN | 1502047 A | 02-06-2004 |
| | | | EP | 1358508 A1 | 05-11-2003 |
| | | | HK | 1065845 A1 | 04-03-2005 |
| | | | JP | 4108478 B2 | 25-06-2008 |
| | | | JP | 2004532391 A | 21-10-2004 |
| | | | NZ | 527547 A | 28-01-2005 |
| | | | US | 2004130702 A1 | 08-07-2004 |
| | | | WO | 02065153 A1 | 22-08-2002 |
| US 2018253404 | A1 | 06-09-2018 | NONE | | |
| EP 3457177 | A1 | 20-03-2019 | CN | 109521435 A | 26-03-2019 |
| | | | EP | 3457177 A1 | 20-03-2019 |
| | | | JP | 2019056567 A | 11-04-2019 |
| | | | US | 2019086541 A1 | 21-03-2019 |

EPO FORM P0459

For more details about this annex : see Official Journal of the European Patent Office, No. 12/82